# EUROPEAN PATENT SPECIFICATION

(11) **EP 4 180 822 B1**
(45) Date of publication and mention of the grant of the patent: **03.04.2024**
(21) Application number: 22202366.5
(22) Date of filing: 19.10.2022
(51) Int. Cl.: G01N 35/10

(54) **PIPETTING UNIT**
PIPETTIEREINHEIT
UNITÉ DE PIPETAGE

(30) Priority: 15.11.2021 LU 102878
(43) Date of publication of application: 17.05.2023
(73) Proprietor: Stratec SE, 75217 Birkenfeld (DE)
(72) Inventor: Kunz, Klaus, 76337 Waldbronn (DE); Philipp, Klaus, 75305 Neuenbürg (DE); Maschke, Uwe, 75210 Keltern (DE)
(74) Representative: Tegethoff, Sebastian

(56) References cited:
- EP-A2- 2 410 342
- US-A1- 2010 212 437
- US-A1- 2016 266 162
- US-A1- 2020 166 325

## Description

### Field of the Invention

The invention relates to a pipetting unit and a system for handling liquids comprising said pipetting unit.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

STRATEC designs and manufactures automated analyzer systems like diagnostic systems for biochemically processing samples, in particular patient samples. Such analyzer systems usually have a liquid handling device, which comprises a pipetting device for aspirating or dispensing liquids in receptacles like multi well plates which are flat plates having a plurality of wells for taking up or providing a liquid.

To speed up handling of liquids in automated analyser systems, multi-needle pipettors are often used to increase the throughput of samples to be analysed by pipetting in parallel from or into multiple wells.

With known multi-needle pipettors for pipetting distances of 9 mm which corresponds to a 9 mm grid of multi well plates, difficulties arise related to the arrangement of the components of a pipettor unit including drives and bearings for instance. The known designs of multi-needle pipettors do not allow the pipetting units to be arranged in any position because of their hardware setup. The pipetting units cannot easily be exchanged and the adjustment and alignment of the axes of a pipettor unit's probe to each other requires considerable effort.

The pipetting units are usually arranged offset for multi-needle pipetting to be able to realise a pipetting distance of 9 mm. Powerful drives with encoders which are required to drive the pipetting units in the Y and Z directions, can be located at the top or bottom of the pipetting units. The arrangement depends on the respective positioning in the multi-needle pipetting unit. This nested structure results in different pipetting units that cannot be positioned arbitrarily in relation to each other. The Z-axis of a pipetting unit dips through the neighbouring pipetting unit. Removal of individual pipetting units is only possible with difficulty and represents a considerable effort in the service case.

Published U.S. patent application US 2016/266162 A1 discloses a pipetting workstation comprising a pipetting mechanism bracket and a plurality of pipetting mechanisms; wherein, the pipetting mechanism comprises a mobile seat, a mobile rod movably mounted on the mobile seat; a mobile rod drive mechanism; a gear capable of turning around the vertical direction; a linear rail fastening seat; and a pipette disposed at the lower end of the mobile rod. US 2016/266162 A further discloses the abovementioned pipetting mechanism and provides usage of the pipetting workstation in such aspects as liquid sample dosing and liquid transferring. The pipetting mechanism used in the pipetting workstation provided US 2016/266162 A can independently make vertical or horizontal movements, and does not require or reduces lubricating services, which accordingly avoid contamination.

Published European patent application EP 2 410 342 A2 teaches A device for aspirating and dispensing more than one liquid sample, said device comprising - a main frame body - more than one pipetting units, said pipetting units extending side by side in parallel with each other; wherein a pipetting unit comprises - an interface for interacting with an interface of a pipette tip, - a first module for aspirating and dispensing a liquid, - a second module for Y-axis movement, and third module for Z-Axis movement, wherein said second and third modules are function independently; - a fourth module for controlling functions of said pipette unit - two frames for receiving at least one of said modules, wherein said at least one module is mounted in one of said frames, - an X-transfer mechanism connected to said main frame body to which said pipetting units are connected; wherein said at least one module of one pipette unit is mounted in one of said two frames, and said at least one module of the adjacent pipette units are mounted in the frame in the location corresponding to the frame of said first pipette unit which is empty.

Published U.S. patent application US 2020/166325 A1 discloses a magnetic angle sensor device and a method for operating such device is provided. The magnetic angle sensor device includes a shaft rotatable around a rotation axis; a magnetic field source coupled to the shaft; a first magnetic angle sensor configured to generate a first signal that represents a first angle based on a first diametric magnetic field from the magnetic field source applied to the first magnetic angle sensor; a second magnetic angle sensor configured to generate a second signal that represents a second angle based on a second diametric magnetic field from the magnetic field source applied to the second magnetic angle sensor; and a combining circuit configured to determine a combined rotation angle based on the first signal and on the second signal.

Published U.S. patent application US 2010/212437 A1 discloses an apparatus for withdrawing respective liquid samples from vials which are closed by closure caps penetratable by a pointed cannula comprises a plurality of racks for accommodating the vials. The device comprises a housing that is slideably carried on a gantry which in turn is slideably carried on guide tracks to provide two degrees of movement of the device for selective alignment of the device with the vials. An abutment member which is vertically slideable in the housing of the device is driven by a second gearwheel by a drive shaft along which the housing is slideably mounted through a first gearwheel and a dog clutch. A cannula which is secured within a first gear rack is driven upwardly and downwardly within the housing by the first gearwheel which is driven by the drive shaft. On engagement of the abutment member with the closure cap of the selected vial, the clutch decouples the second gearwheel from the first gearwheel so that the cannula is urgeable through the closure cap into the vial for withdrawing the liquid sample. The clutch retains the second gearwheel decoupled from the first gearwheel until the cannula has been withdrawn from the closure cap to prevent displacement of the closure cap during withdrawal of the cannula therethrough.

Published U.S. application US 2016/266162 A1 provides a pipetting workstation comprising a pipetting mechanism bracket and a plurality of pipetting mechanisms; wherein, the pipetting mechanism comprises a mobile seat, a mobile rod movably mounted on the mobile seat; a mobile rod drive mechanism; a gear capable of turning around the vertical direction; a linear rail fastening seat; and a pipette disposed at the lower end of the mobile rod. The present invention further provides the abovementioned pipetting mechanism. The present invention further provides usage of the pipetting workstation in such aspects as liquid sample dosing and liquid transferring. The pipetting mechanism used in the pipetting workstation provided by the present invention can independently make vertical or horizontal movements, and does not require or reduces lubricating services, which accordingly avoid contamination.

Thus, there is a need for a pipetting unit allowing a simplified arrangement, positioning and exchange of the pipetting unit.

### Object of the Invention

It is therefore the object of this invention to provide a pipetting unit which allows a simplified arrangement, positioning and exchange of the pipetting unit.

### Summary of the Invention

The present invention provides a pipetting unit according to claim 1, comprising a housing with two parallel flat surfaces with a maximal distance of 17.5 mm between them, wherein the housing comprises a Z-shaft by surrounding it and a Z-shaft guiding, wherein the Z-shaft guiding comprises two L-bearings with spring loaded counter bearings for pushing the Z-shaft with a first outer surface towards a first longitudinal end of the housing, wherein the outer surface of the Z-shaft opposite the first outer surface is toothed; and wherein the housing further comprises a Z motor gear unit with a Z-drive and a Z-drive gear wheel which engages with its teeth into the toothed surface of the Z-shaft for moving the Z-shaft upwards and downwards; and wherein the housing further comprises a Y-drive comprising a Y-drive gear wheel which is mounted to a Y-drive motor shaft, wherein the Y-drive gear wheel is arranged next to an opening in the housing for engaging into a toothed Y-drive gear rack .

In a further aspect of the present invention, the Z-drive is a Z-drive motor with a Z-drive motor shaft comprising a diametrically magnetised round magnet at a first end of the Z-drive motor shaft and an associated encoder chip located on a circuit board on the opposite side of the Z-drive motor shaft and the magnetised round magnet for determining the rotation angle of a magnetic field so that the position of the Z-drive's motor shaft can be determined.

The housing may comprise a slotted light barrier for initialising the Z-shaft in a further embodiment.

In another embodiment, a first end of the Z-shaft comprises an integrated pipetting pump for providing or taking up liquids.

In another aspect of the invention, the Y-drive is a Y-drive motor which is connected to the housing.

In a further embodiment, an axis of the Z-drive gear wheel for engaging into the toothed surface of the Z-shaft is mounted to a plate which can be fixed against rotation around the axis of the Z-dive gear wheel by a clamping screw in an oblong hole, wherein the clamping screw can be moved in the oblong hole for adjusting the position of the axis.

In another embodiment, the Z-drive gear wheel is made of a compressible material or has between its outer circumference and its axis a S-, Z-, or C-shape configured to allow a play compensation.

In another embodiment, the Y-drive gear wheel is arranged at a first side of the opening and on the opposite side to the first side of the opening is a ball bearing arranged as a counter bearing.

In another embodiment, the Z-drive motor gear unit is between the Z-drive motor shaft's end of the Z-drive and the Z-drive gear wheel.

Another object of the invention is to provide a system for handling liquids according to claim 10, comprising a pipetting device as described in the previous paragraphs.

The system may also comprise a Y-drive gear rack that is guided through the opening in the housing into which the Y-drive gear wheel of the Y-drive engages.

In another embodiment of the system, the housing of the pipetting unit comprises on an outer surface at least two vertically spaced ball bearings for arranging a guiding bar between them.

In another aspect, a first of the at least two vertically spaced ball bearings is connected to an adjusting slide for moving the first ball bearing vertically for adjusting the distance between the at least two ball bearings.

In a further embodiment of the system, at least one of the at least two ball bearings is mounted on an eccentric for adjusting vertically the position of the housing on the guiding bar.

The system as described in the previous paragraphs may also comprise further slide bearings which are arranged in openings of the housing on a cylindrical profile and ball bearings (41) are arranged on the guiding bar for guiding movements of the pipetting unit in Y-direction

Still other aspects, features, and advantages of the present invention are readily apparent from the following detailed description, simply by illustrating preferable embodiments and implementations. The drawings and descriptions are to be regarded as illustrative in nature, and not as restrictive. Additional objects and advantages of the invention will be set forth in part in the description which follows and in part will be obvious from the description, or may be learned by practice of the invention.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows a single pipetting unit.
FIG. 2 shows a housing.
FIG. 3A shows a Z-drive comprising a flat motor-gear unit.
FIG. 3B shows the backside of a Z-drive comprising a flat motor-gear unit.
FIG. 3C shows a sectional view through a Z-drive comprising a flat motor-gear unit.
FIG. 4 shows the Z-drive motor gear unit.
FIG. 5 an inherently resilient Z-drive gear wheel.
FIG. 6 shows a compact gear motor as Y-drive which engages into a Y-drive gear rack.
FIG. 7 shows a spring-loaded adjustment slide.
FIG. 8 shows a cassette on a guiding bar.
FIG. 9 and FIG. 10 show a Z-shaft guiding in more detail.

### Detailed Description of the Invention and the Figures

The technical problem is solved by the independent claim. The dependent claims cover further specific embodiments of the invention.

The present invention provides a universal pipetting unit which is a device that may be installed in automated analyser systems like diagnostic devices wherein the pipetting unit has a maximum width of 18 mm. The compact design of the pipetting unit with a maximum width of 18 mm is necessary to realise a pipetting distance of 9 mm (grid of microtitre plates) when the pipetting units are arranged opposite and staggered to each other. To allow for tolerances, a maximum width of 17.5 mm is also envisaged for the pipetting unit. The design of the cassette housing is based on a very flat Z-axis drive with special gearing and a compact Y-drive to make it possible to comply with the maximum width. The housing of such a pipetting unit has two flat surfaces with a distance of 18 mm or 17.5 mm between the outer surfaces of the housing.

The pipetting unit can be installed or arranged in any position of a multi-needle pipettor due to its flat design. No conversion or individual adaptation of the pipetting unit is necessary. This saves costs for production, service and spare parts stocking. The following description of the drawings relates to embodiments of a multi-needle pipettor according to the present disclosure with exemplary arrangement of the pipetting units.

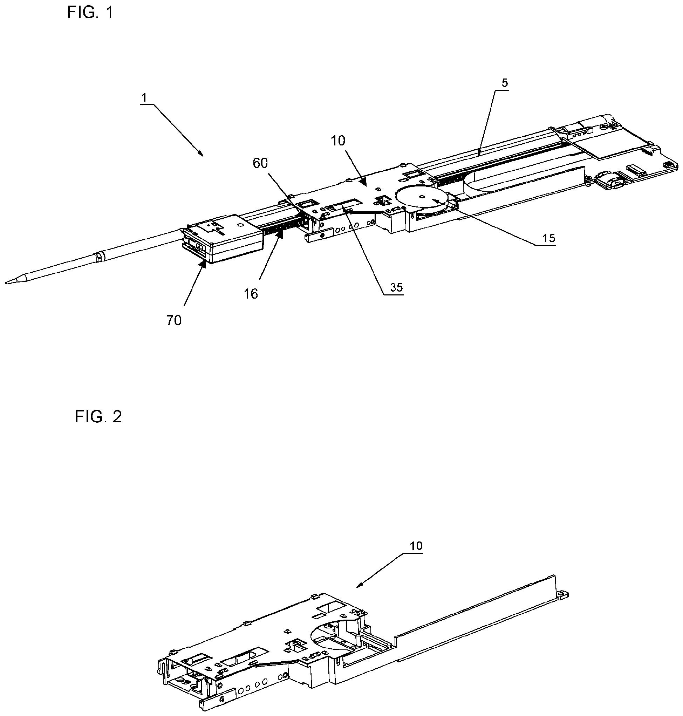

FIG. 1 shows a single pipetting unit 1. The pipetting unit 1 comprises a Z-shaft 5 and a housing 10. The housing 10 which may also be designated as a cassette comprises the Z-shaft 5 by surrounding it and further surrounds Z-drive 15, Y-drive 35 and associated electronics (not shown) for controlling the Z-drive 15 in the housing's 10 flat design. The housing 10 comprises further, guidings for the Z- and Y-shaft (not shown in detail).

A pipetting sub-unit 70 comprises a pipetting pump (not shown) which is arranged at a first end of the Z-shaft 5. The pipetting sub-unit 70 moves upwards and downwards whenever the Z-shaft 5 is actuated by the rotating Z-drive gear wheel 25 which engages into the toothed surface 16 of the Z-shaft 5.

The housing 10 (FIG. 2) can be made of different materials. It can be made of an injection moulded part with a stiffening plate, or alternatively it may be milled from a metal part or it can be made of zinc or aluminum via a die casting process.

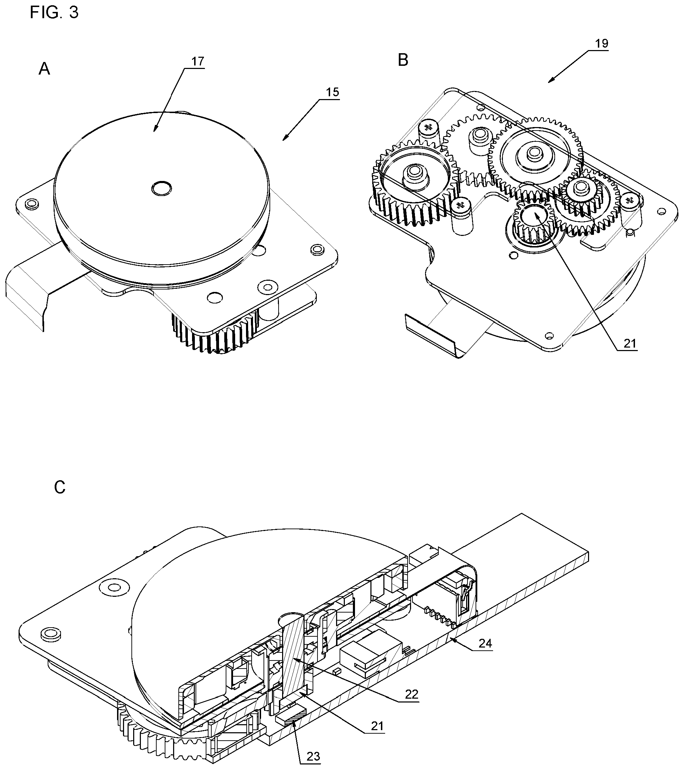

The Z-shaft 5 has a toothed surface 16 and the Z-drive 15 which comprises a flat Z-drive motor-gear unit 19 with a Z-drive gear wheel 25 engaging with its teeth into the toothed surface16 of the Z-shaft 5, which is shown in FIG. 3A. The flat Z-drive motor gear unit 19 can be in an embodiment an EC gear motor 17 (FIG. 3B) which is used to move the Z-shaft. The Z-drive contains a diametrically magnetized round magnet 21 at a first end of the motor shaft 22. The associated encoder chip 23 is located on a circuit board 24 on the opposite side of the motor axis and the magnet 21, as shown in FIG. 3C.

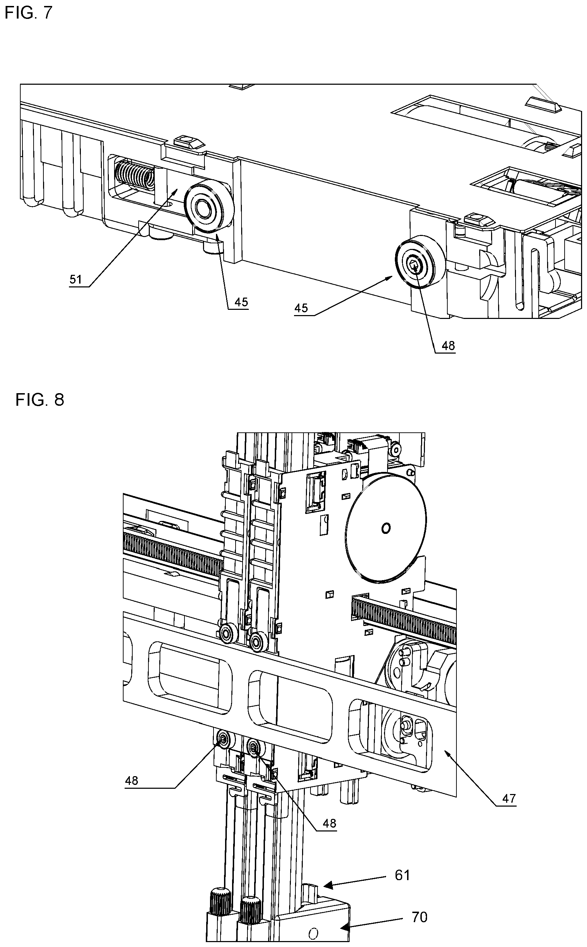

This arrangement is used to determine the angle of rotation of the magnetic field and to determine an exact position of the Z-shaft. The Z-shaft of the pipetting unit is initialised via a slotted light barrier 60 which is arranged on the side of the housing facing the pipetting sub-unit 70 (comp. FIG. 1). A pin 61 (comp. FIG. 8) is arranged on the side of the pipetting sub-unit 70 facing the housing 10. When pin 61 interrupts the light beam of the slotted light barrier 60, the position of the pipetting sub-unit 70 and the housing 10 to another are known. Starting from this known position and combining it with the determined angle of rotation performed by the Z-drive, it is possible to exactly determine the distance between pipetting sub-unit 70 and housing 10. Compared to the state of the art, this arrangement is narrower and allows the identical pipetting units to be arranged in the 9 mm grid of the microtitre plates.

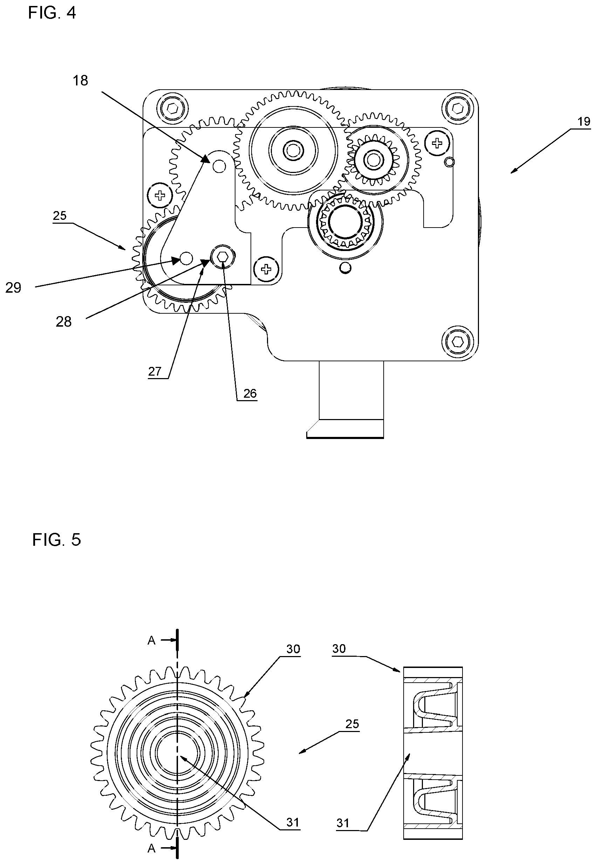

FIG. 4 shows the Z-drive motor gear unit 19. The play between the toothed surface 16 of the Z-shaft 5 (not shown) and a Z-drive gear wheel 25 engaging in said toothed surface 16 is adjusted by means of a clamping screw 26 which can be moved in an oblong hole 28 for fixing a plate 27 to which the axis 25 of the Z-drive gear wheel is fixed. Once the adjustment has been made, plate 27 is fixed with clamping screw 26. Plate 27 rotates around axis 18 of a gear wheel of the Z-drive motor gear unit which actuates the Z-drive gear wheel 25.

FIG. 5 shows an alternative to an adjustment by a movable plate. Alternatively, as shown in FIG. 4, an inherently resilient Z-drive gear wheel 25 can be used for the Z-drive in order to realize a backlash-free installation. Such a gear wheel 25 may have a design with an elastic or compressible material arranged between outer gearing 30 and a centrally arranged hole 31. Alternatively, the shape of a material between outer gearing 30 an the centrally arranged hole 31 may allow a play between them, as FIG. 5B shows an S-shape in the sectional view on the right side of FIG. 5B. Different shapes like a Z-shape, a C-shape or other shapes may also be used.

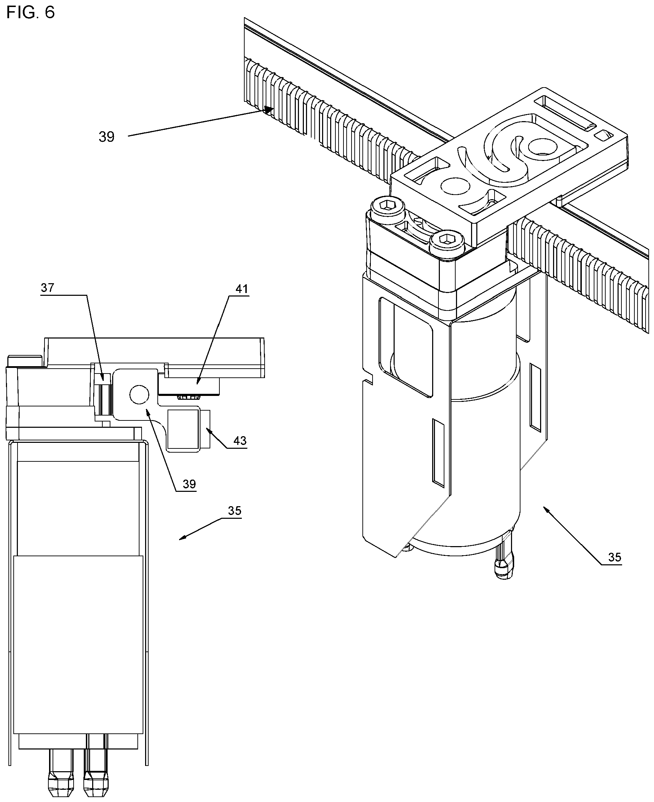

FIG. 6 shows that a Y-drive 35 which may be provided by a compact DC gear motor (not shown) which is flexibly (elastically mounted in the X-direction) connected to the housing 10 (not shown). A Y-drive gear wheel 37 is mounted to the Y-drive motor shaft (not visible) for engaging into the toothed Y-drive gear rack 39. The Y-drive gear wheel 37 is guided by a deep-groove ball bearing 41 for the Y-drive. A magnetic tape encoder 43 is integrated into the housing (not shown) to determine the respective Y-position of the pipetting unit (not shown). A magnetic tape (not shown) is also attached to the toothed Y-drive gear rack 39.

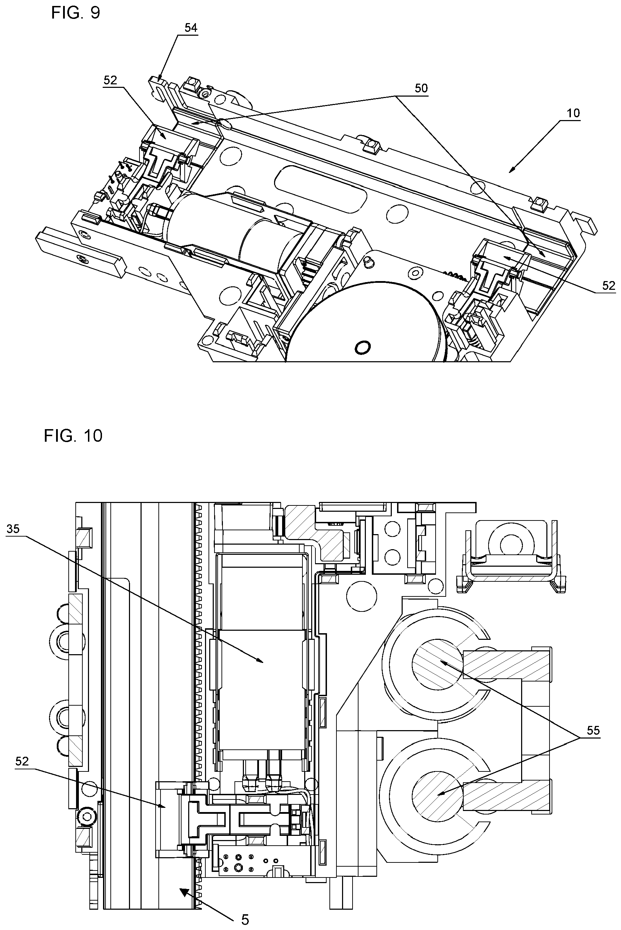

The pipetting unit is guided in the Y-direction by slide bearings 55 (FIG. 10) on a cylindrical profile and by ball bearings 45 on a right-angled guiding bar 47 (FIG. 8). The position of the cassette on a guiding bar can be adjusted vertically via the eccentrically mounted ball bearing 45, 48 (FIG. 7, 8). The pressure spring in the spring loaded adjustment slide 51 of the second ball bearing automatically ensures a play-free movement between the ball bearing and the guiding bar.

FIG. 9 and FIG. 10 show a Z-shaft guiding in more detail. The guiding enables a horizontal positioning and vertical movement of the Z-shaft (not shown). The Z-shaft is pushed by two L-bearings 50 with spring loaded counter bearings 52 towards a first longitudinal end of the housing 10. The friction must be high enough to hold the weight of the Z-shaft and at the same time small enough to keep the required force of the motor for actuating as low as possible.

During assembly or servicing, when the pipetting unit is in a de-energised state, the drive can be damaged if the Z-shaft is moved manually. To safeguard against this case of failure, the Z-shaft can be cushioned with a spring 54 (FIG. 9). Alternatively, the motor can be shortcircuited via a relay in the de-energised state, so that a braking effect is created by the motor when the rack is pushed up manually.

FIG 10 shows Y-drive 35 and spring of counter bearing 52 for keeping the Z-shaft 5 in its position within the housing. FIG. 10 shows also slide bearings 55 which guide the pipetting unit in a Y-direction.

The advantages of a system according to the present disclosure relate to the following:
a. Due to the compact design of the cassette with a module width of 17.5 mm, a modular design with 18 mm pitch is possible.
b. A pitch of 9 mm is possible with opposite and displaced arranged pipetting units.
c. The cassette can be installed in any position of the pipetting arm without conversion. This is a great advantages especially in case of services which have to be done.
d. It results in cost savings for production, service and for spare parts stocking:
   i. Less time required to replace (remove, adjust) individual Z-axes.
   ii. Lower spare parts inventory, as there is a smaller variation of spare parts.

The foregoing description of the preferred embodiment of the invention has been presented for purposes of illustration and description. It is not intended to be exhaustive or to limit the invention to the precise form disclosed.

The embodiment was chosen and described in order to explain the principles of the invention and its practical application to enable one skilled in the art to utilize the invention in various embodiments as are suited to the particular use contemplated. It is intended that the scope of the invention be defined by the claims appended hereto.

### Reference Numerals

- 1: pipetting unit
- 5: Z-shaft
- 10: housing
- 15: Z-drive
- 16: toothed surface Z-shaft
- 17: EC motor
- 18: axis of gear wheel of Z-drive motor gear unit
- 19: Z-drive motor gear unit
- 21: magnet
- 22: Z-drive motor shaft
- 23: encoder chip
- 24: circuit board
- 25: Z-drive gear wheel
- 26: clamping screw
- 27: plate
- 28: oblong hole
- 29: axis of Z-drive gear wheel
- 30: gearing Z-drive gear wheel
- 31: central hole Z-drive gear wheel
- 35: Y-drive
- 37: Y-drive gear wheel
- 39: Y-drive gear rack
- 41: ball bearing Y-drive
- 43: magnetic tape encoder
- 45: ball bearing
- 47: guiding bar
- 48: eccentric
- 50: L-bearing
- 51: spring loaded adjustment slide
- 52: counter bearing
- 54: spring
- 55: slide bearing
- 60: slotted light barrier
- 61: pin
- 70: pipetting sub-unit

## Claims

1. A pipetting unit (1), comprising a housing (10) with two parallel flat surfaces with a maximal distance of 17.5 mm between them , wherein the housing (10) comprises a Z-shaft (5) by surrounding it and a Z-shaft guiding, wherein the Z-shaft guiding comprises two L-bearings (50) with spring loaded counter bearings (52) for pushing the Z-shaft (5) with a first outer surface towards a first longitudinal end of the housing (10), wherein the outer surface of the Z-shaft (5) opposite the first outer surface is toothed; and wherein the housing (10) further comprises a Z drive motor gear unit (19) with a Z-drive (15) and a Z-drive gear wheel (25) which engages with its teeth into the toothed surface of the Z-shaft (16) for moving the Z-shaft (5) upwards and downwards; and wherein the housing (10) further comprises a Y-drive (35) comprising a Y-drive gear wheel (37) which is mounted to a Y-drive motor shaft, wherein the Y-drive gear wheel (37) is arranged next to an opening in the housing (10) for engaging into a toothed Y-drive gear rack (39) .

2. The pipetting unit (1) of claim 1, wherein the Z-drive (15) is a Z-drive motor with a Z-drive motor shaft (22) comprising a diametrically magnetised round magnet (21) at a first end of the Z-drive motor shaft and an associated encoder chip (23) is located on a circuit board (24) on the opposite side of the Z-drive motor shaft (22) and the magnetised round magnet (21) for determining the rotation angle of a magnetic field so that the position of the Z-drive's motor shaft (22) can be determined.

3. The pipetting unit (1) of claim 1 or 2, wherein the housing (10) comprises a slotted light barrier (60) for initialising the Z-shaft (5).

4. The pipetting unit (1) of any one of claims 1 to 3, wherein a first end of the Z-shaft (5) comprises an integrated pipetting pump for providing or taking up liquids.

5. The pipetting unit (1) of any one of claims 1 to 4, wherein the Y-drive (35) is a Y-drive motor which is connected to the housing.

6. The pipetting unit (1) of any one of claims 1 to 5, wherein an axis of the Z-drive gear wheel (29) for engaging into the toothed surface of the Z-shaft (16) is mounted to a plate (27) which can be fixed against rotation around the axis of the Z-dive gear wheel (29) by a clamping screw (26) in an oblong hole (28), wherein the clamping screw (26) can be moved in the oblong hole (28) for adjusting the position of the axis (29).

7. The pipetting unit (1) according to any one of claims 1 to 6, wherein the Z-drive gear wheel is made of a compressible material or has between its outer circumference and its axis a S-, Z-, or C-shape configured to allow a play compensation.

8. The pipetting unit (1) of any one of claims 1 to 7, wherein the Y-drive gear wheel (37) is guided by a deep-groove ball bearing (41).

9. The pipetting unit (1) of any one of claims 1 to 8, comprising a Z-drive motor gear unit (19) between the Z-drive motor shaft's end of the Z-drive (15) and the Z-drive gear wheel (25).

10. A system for handling liquids, comprising a pipetting unit (1) according to claims 1 to 9.

11. The system of claim 10, comprising a Y-drive gear rack (39) that is guided through the opening in the housing (10) into which the Y-drive gear wheel (37) of the Y-drive (35) engages.

12. The system of any one of claims 10 or 11, wherein the housing (10) of the pipetting unit (1) comprises on an outer surface at least two vertically spaced ball bearings (41) for arranging a guiding bar (47) between them.

13. The system of claim 12, wherein a first of the at least two vertically spaced ball bearings (41) is connected to an adjusting slide for moving the first ball bearing vertically for adjusting the distance between the at least two ball bearings (41).

14. The system of claim 12 or 13, wherein at least one of the at least two ball bearings (41) is mounted on an eccentric (48) for adjusting vertically the position of the housing (10) on the guiding bar (47).

15. The system of any one of claims 10 to 14, wherein further slide bearings (55) are arranged in further openings of the housing (10) on a cylindrical profile and ball bearings (41) are arranged on the guiding bar (47) for guiding movements of the pipetting unit (1) in Y-direction.

## Patentansprüche

1. Eine Pipettiereinheit (1), umfassend ein Gehäuse (10) mit zwei parallelen ebenen Flächen mit einem maximalen Abstand von 17.5 mm zwischen ihnen, wobei das Gehäuse (10) eine Z-Welle (5), die es umgibt, und eine Z-Wellenführung umfasst, wobei die Z-Wellenführung zwei L-Lager (50) mit federbelasteten Gegenlagern (52) umfasst, um die Z-Welle (5) mit einer ersten Außenfläche zu einem ersten Längsende des Gehäuses (10) zu schieben, wobei die Außenfläche der Z-Welle (5) gegenüber der ersten Außenfläche gezahnt ist; und wobei das Gehäuse (10) ferner eine Z-Antriebsmotor-Getriebeeinheit (19) mit einem Z-Antrieb (15) und einem Z-Antriebszahnrad (25) aufweist, das mit seinen Zähnen in die gezahnte Oberfläche der Z-Welle (16) eingreift, um die Z-Welle (5) aufwärts und abwärts zu bewegen; und wobei das Gehäuse (10) ferner einen Y-Antrieb (35) aufweist, der ein Y-Antriebszahnrad (37) umfasst, das an einer Y-Antriebsmotorwelle angebracht ist, wobei das Y-Antriebszahnrad (37) neben einer Öffnung in dem Gehäuse (10) angeordnet ist, um in eine gezahnte Y-Antriebszahnstange (39) einzugreifen.

2. Die Pipettiereinheit (1) nach Anspruch 1, wobei der Z-Antrieb (15) ein Z-Antriebsmotor mit einer Z-Antriebsmotorwelle (22) ist, die einen diametral magnetisierten Rundmagneten (21) an einem ersten Ende der Z-Antriebsmotorwelle umfasst, und ein zugehöriger Encoderchip (23) auf einer Leiterplatte (24) auf der gegenüberliegenden Seite der Z-Antriebsmotorwelle (22) und des magnetisierten Rundmagneten (21) angeordnet ist, um den Drehwinkel eines Magnetfelds zu bestimmen, so dass die Position der Motorwelle (22) des Z-Antriebs bestimmt werden kann.

3. Die Pipettiereinheit (1) nach Anspruch 1 oder 2, wobei das Gehäuse (10) eine geschlitzte Lichtschranke (60) zur Initialisierung der Z-Welle (5) aufweist.

4. Die Pipettiereinheit (1) nach einem der Ansprüche 1 bis 3, wobei ein erstes Ende des Z-Welle (5) eine integrierte Pipettierpumpe zur Bereitstellung oder Aufnahme von Flüssigkeiten aufweist.

5. Die Pipettiereinheit (1) nach einem der Ansprüche 1 bis 4, wobei der Y-Antrieb (35) ein Y-Antriebsmotor ist, der mit dem Gehäuse verbunden ist.

6. Die Pipettiereinheit (1) nach einem der Ansprüche 1 bis 5, wobei eine Achse des Z-Antriebszahnrads (29) zum Eingriff in die Zahnfläche der Z-Welle (16) an einer Platte (27) angebracht ist, die durch eine Klemmschraube (26) in einem Langloch (28) gegen Verdrehen um die Achse des Z-Zahnrads (29) fixierbar ist, wobei die Klemmschraube (26) zur Einstellung der Position der Achse (29) im Langloch (28) bewegbar ist.

7. Die Pipettiereinheit (1) nach einem der Ansprüche 1 bis 6, wobei das Z-Antriebszahnrad aus einem komprimierbaren Material besteht oder zwischen seinem Außenumfang und seiner Achse eine S-, Z- oder C-Form aufweist, die einen Spielausgleich ermöglicht.

8. Die Pipettiereinheit (1) nach einem der Ansprüche 1 bis 7, wobei das Y-Antriebszahnrad (37) in einem Rillenkugellager (41) geführt ist.

9. Die Pipettiereinheit (1) nach einem der Ansprüche 1 bis 8, mit einem Z-Antriebsmotor-Getriebe (19) zwischen dem Ende der Z-Antriebsmotorwelle des Z-Antriebs (15) und dem Z-Antriebszahnrad (25).

10. Ein System zur Handhabung von Flüssigkeiten, umfassend eine Pipettiereinheit (1) nach einem der Ansprüche 1 bis 9.

11. Das System nach Anspruch 10, mit einer Y-Antriebszahnstange (39), die durch die Öffnung im Gehäuse (10) geführt wird, in die das Y-Antriebszahnrad (37) des Y-Antriebs (35) eingreift.

12. Das System nach einem der Ansprüche 10 oder 11, wobei das Gehäuse (10) der Pipettiereinheit (1) an einer Außenfläche mindestens zwei vertikal beabstandete Kugellager (41) zur Anordnung einer Führungsstange (47) zwischen ihnen aufweist.

13. Das System nach Anspruch 12, wobei ein erstes der mindestens zwei vertikal beabstandeten Kugellager (41) mit einem Einstellschlitten verbunden ist, um das erste Kugellager vertikal zu bewegen, um den Abstand zwischen den mindestens zwei Kugellagern (41) einzustellen.

14. Das System nach Anspruch 12 oder 13, bei dem mindestens eines der mindestens zwei Kugellager (41) auf einem Exzenter (48) zur vertikalen Einstellung der Position des Gehäuses (10) auf der Führungsstange (47) montiert ist.

15. Das System nach einem der Ansprüche 10 bis 14, wobei in weiteren Öffnungen des Gehäuses (10) weitere Gleitlager (55) auf einem zylindrischen Profil angeordnet sind und an der Führungsstange (47) Kugellager (41) zur Führung von Bewegungen der Pipettiereinheit (1) in Y-Richtung angeordnet sind.

## Revendications

1. Une unité de pipetage (1), comprenant un boîtier (10) avec deux surfaces planes parallèles avec une distance maximale de 17.5 mm, dans lequel le boîtier (10) comprend un arbre Z (5) en l'entourant, et un guidage de l'arbre Z, dans lequel le guidage de l'arbre Z comprend deux roulements en L (50) avec des contre-roulements à ressort (52) pour pousser l'arbre Z (5) avec une première surface extérieure vers une première extrémité longitudinale du boîtier (10), dans lequel la surface extérieure de l'arbre Z (5) opposée à la première surface extérieure est dentée ; et dans lequel le boîtier (10) comprend en outre un motoréducteur d'entraînement en Z (19) avec un entraînement en Z (15) et une roue dentée d'entraînement en Z (25) qui s'engage avec ses dents dans la surface dentée de l'arbre en Z (16) pour déplacer l'arbre en Z (5) vers le haut et vers le bas ; et dans lequel le boîtier (10) comprend en outre un entraînement Y (35) comprenant une roue dentée d'entraînement Y (37) qui est montée sur un arbre moteur d'entraînement Y, dans lequel la roue dentée d'entraînement Y (37) est disposée à côté d'une ouverture dans le boîtier (10) pour s'engager dans une crémaillère d'entraînement Y dentée (39) .

2. L'unité de pipetage (1) de la revendication 1, dans laquelle l'entraînement en Z (15) est un moteur d'entraînement en Z avec un arbre de moteur d'entraînement en Z (22) comprenant un aimant rond diamétralement magnétisé (21) à une première extrémité de l'arbre de moteur d'entraînement en Z et une puce d'encodage associée (23) est située sur une carte de circuit imprimé (24) sur le côté opposé de l'arbre de moteur d'entraînement en Z (22) et de l'aimant rond magnétisé (21) pour déterminer l'angle de rotation d'un champ magnétique de sorte que la position de l'arbre de moteur d'entraînement en Z (22) peut être déterminée.

3. L'unité de pipetage (1) de la revendication 1 ou 2, dans laquelle le boîtier (10) comprend une barrière lumineuse fendue (60) pour initialiser l'arbre Z (5).

4. L'unité de pipetage (1) de l'une des revendications 1 à 3, dans laquelle une première extrémité de l'arbre en Z (5) comprend une pompe de pipetage intégrée pour fournir ou prélever des liquides.

5. L'unité de pipetage (1) de l'une des revendications 1 à 4, dans laquelle l'entraînement en Y (35) est un moteur d'entraînement en Y relié au boîtier.

6. L'unité de pipetage (1) de l'une des revendications 1 à 5, dans laquelle un axe de la roue dentée en Z (29) pour s'engager dans la surface dentée de l'arbre en Z (16) est monté sur une plaque (27) qui peut être fixée contre la rotation autour de l'axe de la roue dentée en Z (29) par une vis de serrage (26) dans un trou oblong (28), dans lequel la vis de serrage (26) peut être déplacée dans le trou oblong (28) pour ajuster la position de l'axe (29).

7. L'unité de pipetage (1) selon l'une des revendications 1 à 6, dans laquelle la roue dentée d'entraînement en Z est constituée d'un matériau compressible ou présente entre sa circonférence extérieure et son axe une forme en S, en Z ou en C configurée pour permettre une compensation du jeu.

8. L'unité de pipetage (1) de l'une des revendications 1 à 7, dans laquelle la roue d'entraînement en Y (37) est guidée par un roulement à billes à gorge profonde (41).

9. L'unité de pipetage (1) de l'une quelconque des revendications 1 à 8, comprenant un réducteur du moteur d'entraînement en Z (19) entre l'extrémité de l'arbre du moteur d'entraînement en Z de l'entraînement en Z (15) et la roue dentée de l'entraînement en Z (25).

10. Un système de manipulation de liquides comprenant une unité de pipetage (1) selon les revendications 1 à 9.

11. Le système de la revendication 10, comprenant une crémaillère d'entraînement en Y (39) qui est guidée à travers l'ouverture du boîtier (10) dans laquelle la roue dentée d'entraînement en Y (37) de l'entraînement en Y (35) s'engage.

12. Le système de l'une des revendications 10 ou 11, dans lequel le boîtier (10) de l'unité de pipetage (1) comprend sur une surface extérieure au moins deux roulements à billes (41) espacés verticalement pour disposer une barre de guidage (47) entre eux.

13. Le système de la revendication 12, dans lequel un premier des au moins deux roulements à billes espacés verticalement (41) est connecté à une glissière de réglage pour déplacer le premier roulement à billes verticalement afin de régler la distance entre les au moins deux roulements à billes (41).

14. Le système de la revendication 12 ou 13, dans lequel au moins un des deux roulements à billes (41) est monté sur un excentrique (48) pour ajuster verticalement la position du boîtier (10) sur la barre de guidage (47).

15. Le système de l'une des revendications 10 à 14, dans lequel d'autres paliers lisses (55) sont disposés dans d'autres ouvertures du boîtier (10) sur un profil cylindrique et des roulements à billes (41) sont disposés sur la barre de guidage (47) pour guider les mouvements de l'unité de pipetage (1) dans la direction Y.
